Europäisches Patentamt

European Patent Office

Office européen des brevets

(19)

(11) Veröffentlichungsnummer: **0 205 015**
**A2**

(12)

# EUROPÄISCHE PATENTANMELDUNG

(21) Anmeldenummer: 86107074.6

(22) Anmeldetag: 24.05.86

(51) Int. Cl.⁴: **B 60 R 11/02**

(30) Priorität: 08.06.85 DE 3520604

(43) Veröffentlichungstag der Anmeldung:
17.12.86 Patentblatt 86/51

(84) Benannte Vertragsstaaten:
AT DE FR IT

(71) Anmelder: Blaupunkt-Werke GmbH
Robert-Bosch-Strasse 200
D-3200 Hildesheim(DE)

(72) Erfinder: Weinert, Alfons
Salzwiese 34
D-3200 Hildesheim(DE)

(72) Erfinder: Gröger, Klaus
Söhrer Tor 8
D-3201 Diekholzen(DE)

(74) Vertreter: Eilers, Norbert, Dipl.-Phys.
Blaupunkt-Werke GmbH Robert-Bosch-Strasse 200
D-3200 Hildesheim(DE)

(54) Mechanische Diebstahl-Sicherung für elektronische Zusatzgeräte mit Kassetten-Laufwerk in Kraftfahrzeugen.

(57) Bei einer mechanischen Diebstahl-Sicherung für elektronische Zusatzgeräte mit Kassetten-Laufwerk, insbesondere Kassetten-Autoradios, die in eine Fahrzeugwand vom Aufenthaltsraum her eingeschoben und in der Fahrzeugwand lösbar befestigt sind, ist als Wechselkassette eine Blindkassette vorgesehen, die ein von der Frontplatte des Zusatzgerätes her bedienbares Sicherheits-Zylinderschloß aufweist, dessen Sperriegel beim Schließen durch ein Fenster in der Decke der Blindkassette durch ein zweites Fenster in der Decke des Zusatzgerätes in ein drittes Fenster eines mit dem Fahrzeug verbundenen Einschubrahmens greift, so daß Fahrzeug, Zusatzgerät und Blindkassette miteinander verriegelt sind. Die Blindkassette ist mit einer Lichtquelle versehen, welche in der Schließstellung des Sicherheitsschlosses die Verriegelung optisch anzeigt.

EP 0 205 015 A2

0205015

Die Erfindung bezieht sich auf eine mechanische Diebstahl-Sicherung für elektronische Zusatzgeräte mit Kassetten-Laufwerk und die Wechselkassetten an ihrer Frontseite aufnehmenden Einschuböffnung, insbesondere Kassetten-Autoradios nach Patentanmeldung Az.: P 34 43 651.0, die in eine Fahrzeugwand vom Aufenthaltsraum her herausziehbar eingeschoben und in der Fahrzeugwand lösbar befestigt sind, und bei der ferner die Wechselkassette eine Blindkassette ist und ein von der Frontplatte des Zusatzgerätes her bedienbares Sicherheits-Zylinderschloß hat, das in der Blindkassette in der Offenstellung ihren Ein- und Ausschub nicht behindernd eingebaut ist und dessen Sperriegel beim Schließen durch ein Fenster in der Decke oder im Boden der Blindkassette durch ein zweites Fenster in der Decke oder im Boden des Zusatzgerätes in ein drittes Fenster eines mit dem Fahrzeug oder der Fahrzeugwand verbundenen Flachteiles (Einschubrahmen, Flachbügel) greift, und daß sich alle drei Fenster decken und das Schließblech bilden, so daß Fahrzeug, Zusatzgerät und Blindkassette miteinander verriegelt und nur durch Aufschließen des Sicherheits-Zylinderschlosses voneinander trennbar sind.

Bei dieser Diebstahl-Sicherung kann die Schwierigkeit auftreten, daß ihr Verriegelungszustand nicht immer zweifelsfrei erkennbar ist.

...

Der Erfindung liegt daher die Aufgabe zugrunde, die Diebstahl-Sicherung nach dem Hauptpatent so zu verbessern, daß ihr Verriegelungszustand eindeutig erkennbar ist.

Hierzu wird erfindungsgemäß vorgeschlagen, daß die Blindkassette eine elektrische Lichtquelle aufweist und das Sicherheitschloß mit Schaltkontakten in Wirkverbindung steht, welche in der Schließstellung des Sicherheitsschlosses die elektrische Lichtquelle mit einer Stromquelle verbinden und so die Verriegelung des Zusatzgerätes optisch signalisieren.

Die mit der Erfindung erzielten Vorteile bestehen insbesondere darin, daß aufgrund der optischen Anzeige die Verriegelung des Zusatzgerätes auch bei einem abgeschlossenen Fahrzeug von außen deutlich erkennbar ist. Dieses wird einen möglichen Dieb davon abhalten, das Fahrzeug aufzubrechen.

Vorteilhafte Ausgestaltungen der Erfindung sind in den Unteransprüchen angegeben.

Ausführungsbeispiele der Erfindung sind in den Zeichnungen angegeben und werden im folgenden näher beschrieben.

Es zeigen gemäß der Hauptanmeldung


Fig. 1     die perspektivische Ansicht eines in einer Kraftfahrzeugwand mit Hilfe eines Einschubrahmens eingesetzten Zusatzgerätes mit

           quer eingeschobener Blindkassette im Einschubfach unter der Gerätedecke nach Verriegelung;


Fig. 2     eine teilweise geschnittene Draufsicht auf die in das Zusatzgerät eingeschobene Blindkassette vor dem Verriegeln;


Fig. 3     eine teilweise geschnittene (Linie A-A) Frontansicht laut

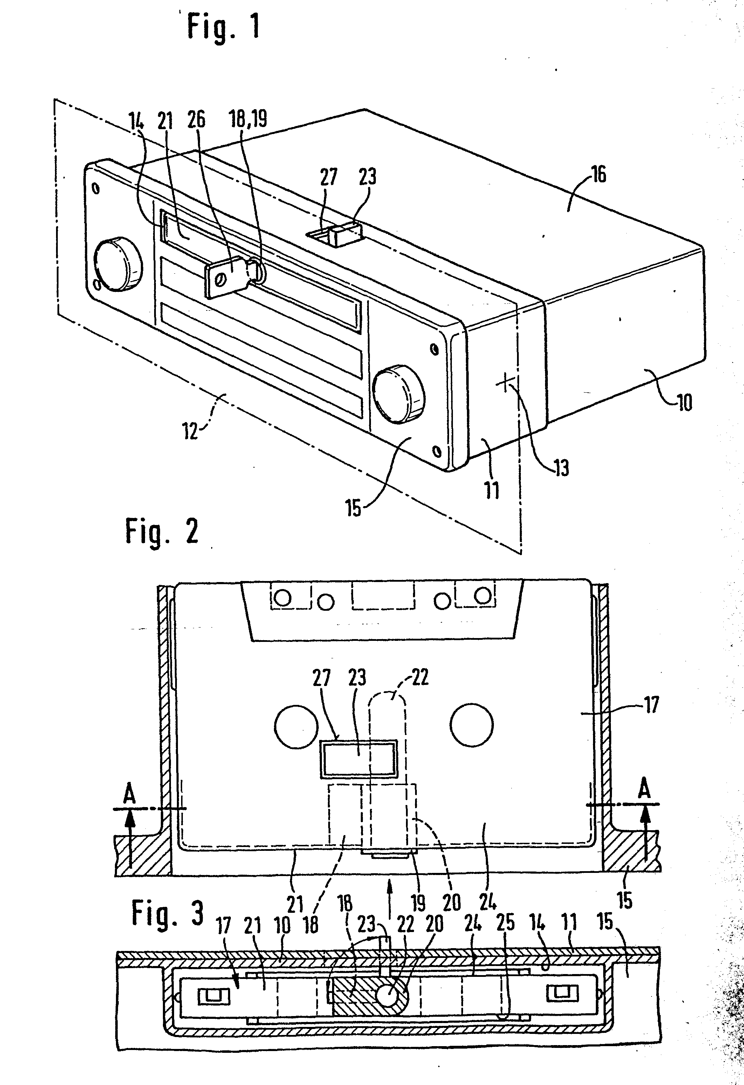

           Fig. 2, jedoch nach dem Verriegeln;

gemäß der Zusatzanmeldung


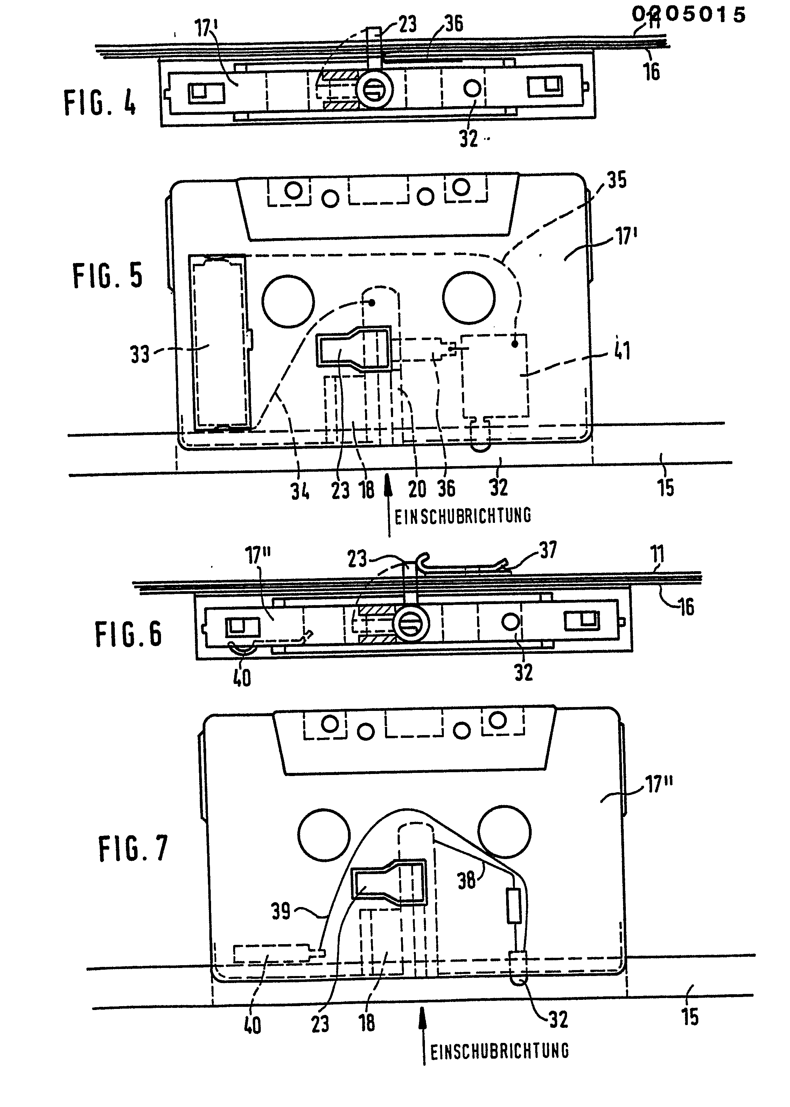

Fig. 4     eine teilweise geschnittene Frontansicht auf eine in das Zusatzgerät eingeschobene, eine eingebaute Stromquelle aufweisende Blindkassette nach dem Verriegeln;


Fig. 5     eine teilweise geschnittene Draufsicht laut Fig. 4, jedoch vor vor-dem Verriegeln;


Fig. 6     eine teilweise geschnittene Frontansicht auf eine in das Zusatzgerät eingeschobene Blindkassette ohne eingebaute Stromquelle nach dem Verriegeln und


                                                              . . .

Fig. 7    eine teilweise geschnittene Draufsicht laut Fig. 6, jedoch vor dem Verriegeln.

Laut Figur 1 bis 3 ist das Zusatzgerät 10 mit Kassetten-Laufwerk unter der Gerätedecke mit Hilfe eines Einschubrahmens 11 in die gestrichelt angedeutete Fahrzeugwand 12, z. B. das Armaturenbrett, eingebaut. Der Einschubrahmen 11 ist fest mit der Fahrzeugwand 12 verbunden, das Zusatzgerät 10 dagegen lösbar mittels der Rasten 13 an den Seitenwänden mit dem Einschubrahmen 11 verrastet und liegt mit seiner die Bedienungselemente und die Einschuböffnung 14 für die Wechselkassetten (Tonbandkassetten) für Quereinschub tragenden Frontplatte 15 über der Stirn des Einschubrahmens 11 auf der Fahrzeugwand 12 auf. Das mit den Wechselkassetten kuppelbare, nicht sichtbare Laufwerk liegt im Beispiel nahe der Decke 16 des Zusatzgerätes 10. Zum Ausbau des Zusatzgerätes 10 können durch die Frontplatte 15 unter Umständen auch von unbefugter Seite herstellbare Lösewerkzeuge an die Rasten 13 geführt und die Rasten gelöst werden, so daß man das Zusatzgerät 10 aus dem Einschubrahmen 11 herausziehen und aus dem Fahrzeug entfernen kann. Soweit ist die Befestigungsvorrichtung bekannt.

Entsprechend den Fig. 2 und 3 ist eine der üblichen Wechselkassette für das Zusatzgerät 10 im Umriß und in den Kupplungsorganen für das Laufwerk genau entsprechende Blindkassette 17 vorgesehen, in deren hohles Inneres mittig und parallel zur Einschubrichtung (Pfeil) ein handelsübliches

. . .

Sicherheits-Zylinderschloß 18 so integriert ist, daß die das Schließloch tragende Stirn- oder Schlüssellochsperre 19 des Schließzylinders 20 flach in der von der Frontplatte 15 des Zusatzgerätes 10 her zugänglichen Stirnwand 21 der Blindkassette 17 und der vom Riegelzapfen 22 getragenen Sperrriegel 23 bei geöffnetem Zylinderschloß 18 horizontal zwischen Decke 24 und Boden 25 der Blindkassette 17 liegen. Dreht man den zum Zylinderschloß 18 gehörigen Sicherheitsschlüssel 26 um 90° nach rechts, dann schwenkt der Riegelzapfen 22 mit dem Sperriegel aus der horizontalen Lage der Fig. 2 in die lotrechte Lage der Fig. 1 und 3.

Zum freien Schwenken des Sperriegels 23 in die lotrechte Sperrlage ist in der Decke 24 der Blindkassette 17 ein Fenster 27 so vorgesehen, daß der Sperriegel 23 ungehindert durchtreten kann und in der lotrechten Sperrlage gegen eine Fensterseite anliegt. Zur gleichzeitigen, gemeinsamen Verriegelung von Blindkassette 17, Zusatzgerät 10 und Einschubrahmen 11 sind in diesen Teilen sich mit dem ersten Fenster 27 deckende, weitere Fenster 27 vorgesehen, so daß der Sperriegel 23 in diese drei, das Schließblech bildenden Fenster 27 eintritt und so Blindkassette 17, Zusatzgerät 10 und Einschubrahmen 11 miteinander und damit das Zusatzgerät 10 fest und untrennbar mit dem Fahrzeug verriegelt. Ein Unbefugter kann jetzt zwar noch unter Umständen die Rasten 13 zwischen Zusatzgerät 10 und Einschubrahmen 11 lösen, trotzdem aber nicht mehr das Zusatzgerät 10 herausziehen. Die Entfernung ist nur dem Befugten durch Öffnen des Sicherheits-Zylinderschlosses 18 mit dem zugehörigen Sicherheitsschlüssel 26 möglich, wobei der Sperriegel 23 alle Fenster 27 verläßt und in seine

. . .

horizontale Ruhelage in der Blindkassette 17 zurückkehrt. In dieser
Stellung kann man dann die Blindkassette 17 mit dem Sicherheitsschlüssel 26
aus dem Zusatzgerät 10 herausziehen und eine echte Wechselkassette einsetzen oder herausnehmen oder das Zusatzgerät 10 aus dem Einschubrahmen 11
in bekannter Weise entfernen.

Entsprechend den Figuren 4 bis 7 ist die Blindkassette 17', 17''
mit einer Leuchtdiode 32 versehen, welche in der bei eingeschobener
Kassette sichtbaren Kassettenstirnwand angeordnet ist.

Bei einem ersten Ausführungsbeispiel nach den Figuren 4 und 5 ist im
Innern der Blindkassetten 17' eine als Stromquelle für die Leuchtdiode 32 dienende Batterie 33 vorgesehen, deren Pole über Leitungen 34, 35
einerseits mit dem Schließzylinder 20 und andererseits mit einer Eingangsklemme eines der Leuchtdiode 32 vorgeschalteten elektrischen Impulsgebers 41 verbunden sind. Die andere Eingangsklemme des elektronischen
Impulsgebers 41 ist mit einer an der Blindkassette 17' befestigten Kontaktfeder 36 elektrisch verbunden, welche derart angeordnet ist, daß sie
den Sperriegel 23 in der verriegelten Stellung des Zylinderschlosses
elektrisch leitend berührt. Aufgrund des Impulsgebers 41 wird die Verriegelung durch ein Blinken der Leuchtdiode 32 angezeigt.

...

0205015

Bei einem zweiten Ausführungsbeispiel nach den Figuren 6 und 7 dient die Fahrzeugbatterie als Stromquelle. Die Stromzuführung erfolgt über eine am Einschubrahmen 11 isoliert befestigte erste Kontaktfeder 37, welche den in der verriegelten Stellung durch die Fenster 27 ragenden Sperrriegel 23 elektrisch leitend berührt. Der Schließzylinder 20 ist über eine Leitung 38 mit der Leuchtdiode 32 leitend verbunden, die über eine weitere Leitung 39 mit einer zweiten Kontaktfeder 40 verbunden ist. Die Kontaktfeder 40 ist derart an der Unterseite der Blindkassette 17'' befestigt, daß sie im eingeschobenen Zustand der Blindkassette 17'' einen elektrischen Massekontakt zum Kassetten-Laufwerk herstellt.

Mechanische Diebstahl-Sicherung für elektronische
Zusatzgeräte mit Kassetten-Laufwerk in Kraftfahrzeugen

Zusatz zur Patentanmeldung Az.: P 34 43 651.0

Patentansprüche

1.  Mechanische Diebstahl-Sicherung für elektronische Zusatzgeräte mit Kassetten-Laufwerk und die Wechselkassetten an ihrer Frontseite aufnehmenden Einschuböffnung, insbesondere Kassetten-Autoradios nach Patentanmeldung Az.: P 34 43 651.0, die in eine Fahrzeugwand vom Aufenthaltsraum her herausziehbar eingeschoben und in der Fahrzeugwand lösbar befestigt sind, und bei der ferner die Wechselkassette eine Blindkassette ist und ein von der Frontplatte des Zusatzgerätes her bedienbares Sicherheits-Zylinderschloß hat, das in der Blindkassette in der Offenstellung ihren Ein- und Ausschub nicht behindernd eingebaut ist und dessen Sperriegel beim Schließen durch ein Fenster in der Decke oder im Boden der Blindkassette durch ein zweites Fenster in der Decke oder im Boden des Zusatzgerätes in ein drittes Fenster eines mit dem Fahrzeug oder der Fahrzeugwand verbundenen Flachteiles

. . .

(Einschubrahmen, Flachbügel) greift, und daß sich alle drei Fenster decken und das Schließblech bilden, so daß Fahrzeug, Zusatzgerät und Blindkassette miteinander verriegelt und nur durch Aufschließen des Sicherheits-Zylinderschlosses voneinander trennbar sind, dadurch gekennzeichnet,

daß die Blindkassette (17'; 17'') eine elektrische Lichtquelle (32) aufweist und das Sicherheitsschloß (18) mit Schaltkontakten in Wirkverbindung steht, welche in der Schließstellung des Sicherheitsschlosses (18) die elektrische Lichtquelle (32) mit einer Stromquelle verbinden und so die Verriegelung des Zusatzgerätes optisch signalisieren.

2.  Mechanische Diebstahl-Sicherung für elektronische Zusatzgeräte nach Anspruch 1,

    dadurch gekennzeichnet,

    daß die Blindkassette (17') eine die Stromquelle bildende Batterie (33) enthält.

3.  Mechanische Diebstahl-Sicherung für elektronische Zusatzgeräte nach Anspruch 2,

    dadurch gekennzeichnet,

    daß als Stromquelle eine wiederaufladbare Batterie vorgesehen ist und daß die Blindkassette (17') Kontakte aufweist, über welche die Batterie aufladbar ist.

4. Mechanische Diebstahl-Sicherung für elektronische Zusatzgeräte nach einem der Ansprüche 2 oder 3,

 dadurch gekennzeichnet,

 daß die Schaltkontakte durch den Sperriegel (23) und eine an der Blindkassette (17') befestigte Kontaktfeder (36) gebildet sind.

5. Mechanische Diebstahl-Sicherung für elektronische Zusatzgeräte nach Anspruch 1,

 dadurch gekennzeichnet,

 daß als Stromquelle die Fahrzeugbatterie vorgesehen ist, daß die Schaltkontakte durch den Sperriegel (23) und eine erste Kontaktfeder (37) gebildet sind, daß die erste Kontaktfeder (37) an dem mit dem Fahrzeug verbindbaren Einschubrahmen (11) isoliert befestigt ist und daß die Blindkassette (17'') mit einer zweiten Kontaktfeder (40) versehen ist, welche im eingeschobenen Zustand einen Massekontakt zum Kassetten-Laufwerk herstellt.

6. Mechanische Diebstahl-Sicherung für elektronische Zusatzgeräte nach einem der Ansprüche 1 bis 5,

 dadurch gekennzeichnet,

 daß als Lichtquelle (32) eine Leuchtdiode vorgesehen ist.

. . .

0205015

7.  Mechanische Diebstahl-Sicherung für elektronische Zusatzgeräte nach Anspruch 6,

    dadurch gekennzeichnet,

    daß der Leuchtdiode (32) ein elektronischer Impulsgeber (41) vorgeschaltet ist, welcher eine blinkende Betriebsart ermöglicht.

**Fig. 1**

**Fig. 2**

**Fig. 3**

0205015

**FIG. 4**

**FIG. 5**

EINSCHUBRICHTUNG

**FIG. 6**

**FIG. 7**

EINSCHUBRICHTUNG